# EUROPÄISCHE PATENTANMELDUNG

(11) **EP 0 657 721 A2**
(43) Veröffentlichungstag der Anmeldung: **14.06.1995**
(21) Anmeldenummer: 94116596.1
(22) Anmeldetag: 21.10.1994
(51) Int. Cl.: G01D 5/34

(54) **Längenmesseinrichtung**

(30) Priorität: 03.12.1993 DE 4341191
(71) Anmelder: Dr. Johannes Heidenhain GmbH, D-83292 Traunreut (DE)
(72) Erfinder: Ernst, Alfons, D-83301 Traunreut (DE)

(57) **Zusammenfassung**

Bei einer Längenmeßeinrichtung (1) gemäß Figur 1 sind auf einer Maßverkörperung (3) mehrere Teilungsspuren (3a, 3b) vorgesehen. Die Teilungsspur (3b), die wegen der Befestigung der Maßverkörperung (3) am Trägerkörper (2) im Bereich B nur an ihrer Oberfläche zugänglich ist, wird dabei von einer Abtasteinrichtung (4) im Auflichtverfahren abgetastet. Der frei zugängliche Bereiche A der Maßverkörperung (3) wird hingegen von der Abtasteinrichtung (4) im Durchlichtverfahren abgetastet. Auf einer weiteren Maßverkörperung (31) ist eine weitere Teilungsspur (3c) vorgesehen, die ebenfalls von der Abtasteinrichtung (4) abgetastet wird.

## Beschreibung

Die Erfindung bezieht sich auf eine Längenmeßeinrichtung gemäß dem Oberbegriff des Anspruches 1.

Derartige Längenmeßeinrichtungen können als Meßeinrichtungen ausgeführt sein, die nach den verschiedensten physikalischen Prinzipien arbeiten.

Die Längenmeßeinrichtungen werden an Maschinen eingesetzt, um die Relativlage zweier oder mehrerer Maschinen-Bauteile zu bestimmen. Dazu sind inkrementale oder codierte Meßsysteme einsetzbar.

Codierte - auch als absolute Meßsysteme bezeichnet - lassen sich leicht und funktionssicher aufbauen, indem man eine große Anzahl von Teilungsspuren nebeneinander auf eine Maßverkörperung aufbringt.

Bedingt durch die Größe eingeführter Gerätequerschnitte sind nur begrenzte Maßverkörperungs-Breiten möglich. Im Interesse einer hohen Funktionssicherheit sind Anordnungen mit vielen Spuren vorteilhaft.

Der Erfindung liegt die Aufgabe zugrunde, bei einer Längenmeßeinrichtung die Anzahl der abtastbaren Teilungsspuren zu erhöhen ohne die Abmessungen der Geräte merklich zu vergrößern. Die Güte der Abtastsignale soll erhalten bleiben.

Diese Aufgabe wird von einer Längenmeßeinrichtung mit den Merkmalen des Anspruches 1 gelöst.

Vorteilhafte Ausgestaltungsmöglichkeiten sind in den abhängigen Ansprüchen angegeben.

Die Vorteile der erfindungsgemäßen Längenmeßeinrichtungen liegen vor allem darin, daß sich codierte Längenmeßeinrichtungen, die eine Vielzahl von Teilungsspuren aufweisen, durch Geräte von verhältnismäßig geringem Querschnitt realisieren lassen.

Das physikalische Abtastprinzip ist dabei von untergeordneter Bedeutung, wobei die Erfindung nachstehend mit Hilfe der Zeichnungen anhand einer lichtelektrisch arbeitenden Ausführungsform noch näher erläutert wird.

Es zeigt
- Figur 1: eine Längenmeßeinrichtung in perspektivischer Darstellung und
- Figur 2: einen Querschnitt der Längenmeßeinrichtung gemäß Figur 1 in schematischer Darstellung.

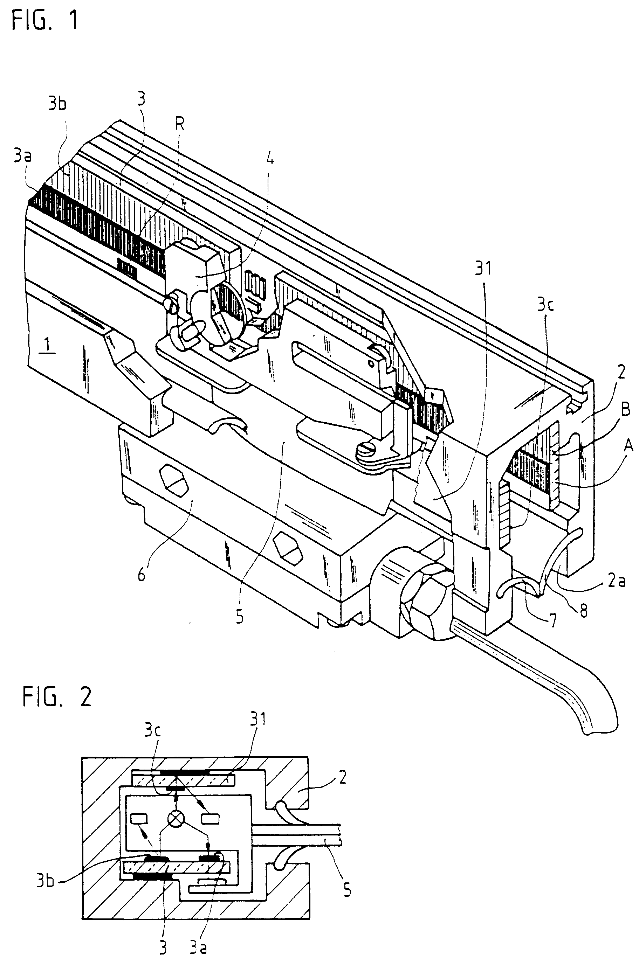

Eine in Figur 1 dargestellte Längenmeßeinrichtung 1 besteht im wesentlichen aus einem Leichtmetall-Gehäuse 2 als Trägerkörper für eine Maßverkörperung 3, die in bekannter Weise befestigt ist. Das Gehäuse 2 ist teilweise geschnitten dargestellt, so daß eine Abtasteinrichtung 4 sichtbar wird. Die Abtasteinrichtung 4 tastet in ebenfalls bekannter Weise photoelektrisch Teilungsspuren 3a, 3b ab, die auf der Maßverkörperung 3 aufgebracht sind. Ein Mitnehmer 5, der den Querschnitt eines zweiseitigen Schwertes hat, verbindet die Abtasteinrichtung 4 mit einem Montagefuß 6. Der Mitnehmer 5 durchragt einen Längsschlitz 2a im Gehäuse 2, der durch dachförmig angeordnete Dichtlippen 7 und 8 abgedichtet ist. Eine weitere Maßverkörperung 31 weist eine weitere Teilungsspur 3c auf, die ebenfalls von der Abtasteinrichtung 4 abgetastet wird.

Eine nicht dargestellte Maschine, bei der die Verschiebungen zwischen Maschinenbett und Schlitten gemessen werden sollen, trägt am Maschinenbett über Montagefuß 6 und Mitnehmer 5 die Abtasteinrichtung 4 und am Schlitten das Gehäuse 2 mit den Maßverkörperungen 3 und 31.

In Figur 2 ist schematisch ein Querschnitt der Längenmeßeinrichtung 1 dargestellt, um das Prinzip einfacher zu erläutern.

Bei diesem Ausführungsbeispiel sind gleiche Bauteile oder Bauteile mit gleicher Funktion mit jeweils denselben Bezugszeichen versehen, um die Anzahl der Bezugszeichen gering zu halten und die Gegenüberstellung zu erleichtern.

Die Besonderheit liegt darin, daß die Teilungsspuren 3a, 3b und 3c auf zwei Glasmaßstäben als Maßverkörperungen 3 und 31 angeordnet sind. Selbstverständlich können weitere Teilungsspuren auf den Maßverkörperungen 3 und 31 vorgesehen werden und bei entsprechender konstruktiver Ausgestaltung können auch noch weitere Maßverkörperungen vorgesehen sein. Die Abtasteinrichtung 4 weist für jede Teilungsspur 3a, 3b, 3c entsprechende Abtastelemente auf, die hier nicht näher erläutert sind, weil sie zum hinlänglich bekannten Stand der Technik gehören. Die fachgerechte Anordnung der Abtastelemente richtet sich nach den technischen Anforderungen im Gerät.

Eine weitere vorteilhafte Besonderheit zur Erhöhung der abtastbaren Spuren liegt darin, daß beim Glasmaßstab 3, der eine der beiden Maßverkörperungen bildet, eine sogenannte Auflicht-Abtastung zusammen mit einer sogenannten Durchlichtabtastung erfolgen kann.

In dem Bereich B, in welchem der Glasmaßstab 3 auf den Trägerkörper 2 aufgekittet ist, befindet sich eine Reflexionsteilung 3b. In dem Bereich A, in welchem der Glasmaßstab 3 frei von beiden Seiten der Oberfläche zugänglich ist, befindet sich eine Transmissionsteilung 3a.

Da sich die beiden Abtastprinzipien in ihren Möglichkeiten unterscheiden, wird die Reflexionsteilung 3b gröber und die Transmissionsteilung 3a feiner in der Teilungsperiode sein.

Die zweite Maßverkörperung 31 weist eine Reflexionsteilung 3c auf, die nach dem Auflichtprinzip ebenfalls von der Abtasteinrichtung 4 abgetastet wird.

Bei entsprechender konstruktiver Ausgestaltung können beide oder zumindest eine der Maßverkörperungen auch aus einem anderen Werkstoff als Glas, beispielsweise aus einem Metallband bestehen, welches in eine Nut des Trägerkörpers 2 eingeschoben werden kann. Eine derartige Maßverkörperung ist allerdings für sich bereits aus dem Stand der Technik bekannt, daher wurde auf eine zeichnerische Darstellung verzichtet, da sich durch eine solche Variation der Rahmen, der durch die Erfindung gesteckt wird, nicht ändert.

Falls die vorbeschriebene Längenmeßeinrichtung 1 als inkrementale Meßeinrichtung ausgeführt wird, die aus irgendwelchen Gründen mehrere Teilungsspuren 3a, 3b, 3c aufweisen muß, so kann wenigstens eine der Teilungsspuren als Referenzmarkenspur ausgebildet sein. Eine Referenzmarke ist in Figur 1 mit R bezeichnet.

Die möglichen Ausführungsformen können auch die Varianten umfassen, bei denen alle Teilungsspuren im Reflexionsverfahren abgetastet werden. Es kann auch für jede Maßverkörperung 3, 31 eine separate Abtasteinrichtung vorgesehen sein, deren Abtastsignale miteinander verknüpft bzw. synchronisiert werden.

## Patentansprüche

1. Längenmeßeinrichtung (1) mit einem Trägerkörper (2) für eine Maßverkörperung (3) die wenigstens eine Teilungsspur (3a, 3b) mit abtastbaren Markierungen aufweist, welche von einer Abtasteinrichtung (4) abgetastet wird, dadurch gekennzeichnet, daß die Längenmeßeinrichtung (1) wenigstens noch eine weitere Maßverkörperung (31) mit wenigstens noch einer weiteren, zur vorgenannten Teilungsspur (3a, 3b) im wesentlichen parallel verlaufenden Teilungsspur (3c) mit weiteren abtastbaren Markierungen zur Abtastung durch eine Abtasteinrichtung (4) aufweist.

2. Längenmeßeinrichtung nach Anspruch 1,dadurch gekennzeichnet, daß durch die Markierungen der Teilungsspuren (3a, 3b, 3c) ein Code zur Bestimmung der Position gebildet wird, der von der Abtasteinrichtung (4) abgetastet wird.

3. Längenmeßeinrichtung nach Anspruch 1, bei der wenigstens eine der Maßverkörperungen mit einem Teil ihres flächigen Oberflächenbereiches an dem Trägerkörper aufliegend befestigt ist, dadurch gekennzeichnet, daß zumindest die Teilungsspuren (3b), die auf der frei zugänglichen Seite der Maßverkörperung (3) gegenüber des am Trägerkörper (2) flächig aufliegenden Bereiches (B) angeordnet sind, von der zugeordneten Abtasteinrichtung (4) abgetastet werden, wobei alle zur Abtastung erforderlichen Elemente der Abtasteinrichtung (4) auf der einen frei zugänglichen Seite der Maßverkörperung (3) angeordnet sind.

4. Längenmeßeinrichtung nach Anspruch 3, dadurch gekennzeichnet, daß die Teilungsspuren (3a), die im freien, nicht aufliegenden Bereich (A) der Maßverkörperung (3) angeordnet sind, von der zugeordneten Abtasteinrichtung (4) abgetastet werden, wobei die zur Abtastung erforderlichen Elemente der Abtasteinrichtung (4) auf beiden Seiten der Maßverkörperung (3) angeordnet sind.

5. Längenmeßeinrichtung nach Anspruch 4, dadurch gekennzeichnet, daß die Maßverkörperung (3) aus transparentem Material wie Glas oder dergleichen besteht.

6. Längenmeßeinrichtung nach Anspruch 3, dadurch gekennzeichnet, daß die Teilungsspuren (3b) gegenüber des am Trägerkörper (2) aufliegenden Bereiches (B) optisch ablesbare Markierungen aufweisen, die im Auflichtverfahren abgetastet werden.

7. Längenmeßeinrichtung nach Anspruch 4, dadurch gekennzeichnet, daß die Teilungsspuren (3a) im freien Bereich (A) der Maßverkörperung (3) optisch ablesbare Markierungen aufweisen, die im Durchlichtverfahren abgetastet werden.

8. Längenmeßeinrichtung nach Anspruch 1 bis 4, dadurch gekennzeichnet, daß die Teilungsspuren (3a, 3b) nach optischen, magnetischen, kapazitiven und induktiven Abtastprinzipien oder deren Kombinationen untereinander abgetastet werden.

9. Längenmeßeinrichtung nach Anspruch 1, dadurch gekennzeichnet, daß der Trägerkörper (2) ein Hohlprofil ist, bei welchem durch Dichtelemente (7, 8) der Innenraum gegenüber Umgebungseinflüssen abgeschirmt ist.

10. Längenmeßeinrichtung nach einem der vorstehenden Ansprüche, dadurch gekennzeichnet, daß die Längenmeßeinrichtung (1) eine inkrementale Meßeinrichtung ist.

11. Längenmeßeinrichtung nach Anspruch 10, dadurch gekennzeichnet, daß eine der Teilungsspuren eine Referenzmarkenspur ist.

12. Längenmeßeinrichtung nach einem der Ansprüche 1 bis 9, dadurch gekennzeichnet, daß die Längenmeßeinrichtung (1) eine codierte Meßeinrichtung ist.

13. Längenmeßeinrichtung nach einem der Ansprüche 1 bis 12, dadurch gekennzeichnet, daß wenigstens eine der Maßverkörperungen (31) als Metallband ausgebildet ist.
